# EUROPEAN PATENT APPLICATION

(11) **EP 1 251 443 A1**
(43) Date of publication of application: **23.10.2002**
(21) Application number: 01127657.3
(22) Date of filing: 20.11.2001
(51) Int. Cl.: G06F 17/60

(54) **Background advertising in an internet environment**

(30) Priority: 20.04.2001 US 839389
(71) Applicant: Hewlett-Packard Company, Palo Alto, CA 94304 (US)
(72) Inventor: Castle, Daniel C., Monmouth, OR 97361 (US)
(74) Representative: Liesegang, Eva

(57) **Abstract**

An advertisement is displayed behind text or other information on a page transmitted over the Internet. The advertisement (300) has an associated transparency level that is adjustable by the server prior to transmission to the client. The client requests the information content (step 501) from the server that adjusts the transparency level (step 510) in response to the equipment of the requesting computer. The server combines the advertisement and information (step 507), if they are stored separately, and transmits (step 515) the resulting Web page to the computer. The Web page is then either displayed on the computer, printed for viewing, or both displayed and printed.

## Description

### Technical Field

The present invention relates generally to Internet communications. More particularly, the present invention relates to apparatus and methods for Internet advertising.

### Background of the Invention

Along with increased Internet usage, Internet advertising has experienced a tremendous increase as well. Internet users have come to expect free access to information and other products in return for being exposed to advertising. Typically, this advertising takes the form of hyper-links of advertisement graphics on the World Wide Web page being viewed by the consumer. Additionally, the advertisements can be transmitted directly to the individual via e-mails.

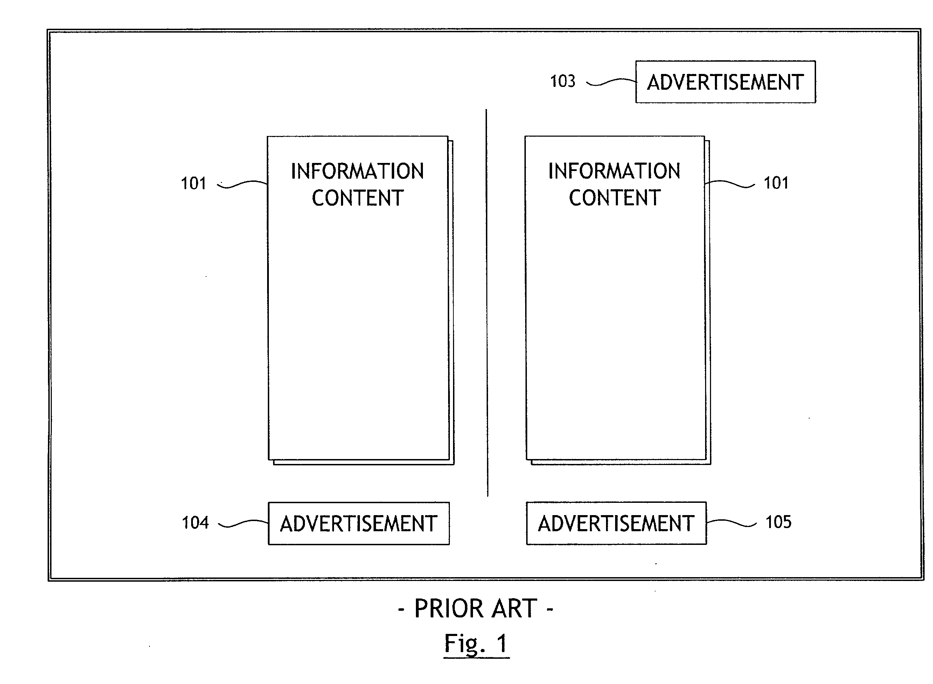

The effectiveness of advertisements corresponds with their size and how long consumers view them. Most Web pages have the majority of the page dedicated to the content that the individual visited the Web site to see. Only a minimal amount of space on the page typically has advertisements. FIG. 1 illustrates a typical prior art Web page (100) with advertisements.

FIG. 1 shows the Web page information content (101) that the consumer typically visits a Web site to see. Around the edges of the content is located the advertisements that are typically focused on products and/or services that relate to the Web page's content. For example, Web content regarding the care and feeding of a pet (101) might have pet products being advertised (103 - 105) on the same Web page.

Some product and service advertisers are struggling financially due to low response rates to their advertisements. The advertisers desire a more effective method to advertise than small blocks of space on the fringes of a Web page's content. There is a resulting unforeseen need for a method to improve the Internet advertisement of products and/or services without disturbing the Web page's content.

### Summary of the Invention

The present invention encompasses a process for displaying advertisements. The preferred embodiment uses a server coupled to the Internet to transmit the advertisements to a personal computer-based client. The advertisement display process displays informational content on a first layer. Behind the informational content, on a second layer, an advertisement is displayed. Both the informational content and the advertisement are viewable simultaneously.

### Brief Description of the Drawings

FIG. 1 shows a typical prior art Web page comprising information content and advertisements.

FIG. 2 shows an embodiment of a page comprising information content and advertisement content in accordance with the present invention.

FIG. 3 shows another embodiment of a page comprising information content and advertisement content in accordance with the present invention.

FIG. 4 shows still another embodiment of a page comprising information content and advertisement content in accordance with the present invention.

FIG. 5 shows a flowchart of the process of the present invention.

FIG. 6 shows a block diagram of a World Wide Web server system in accordance with the present invention.

### Detailed Description of the Preferred Embodiment

The present invention provides an advertisement that appears behind text on either a Web page or on a printed page. The advertisement is clearly visible as is the information content that is printed or displayed above the advertisement. The advertisement is larger than a typical Web page advertisement due to the increased space now available behind the information content.

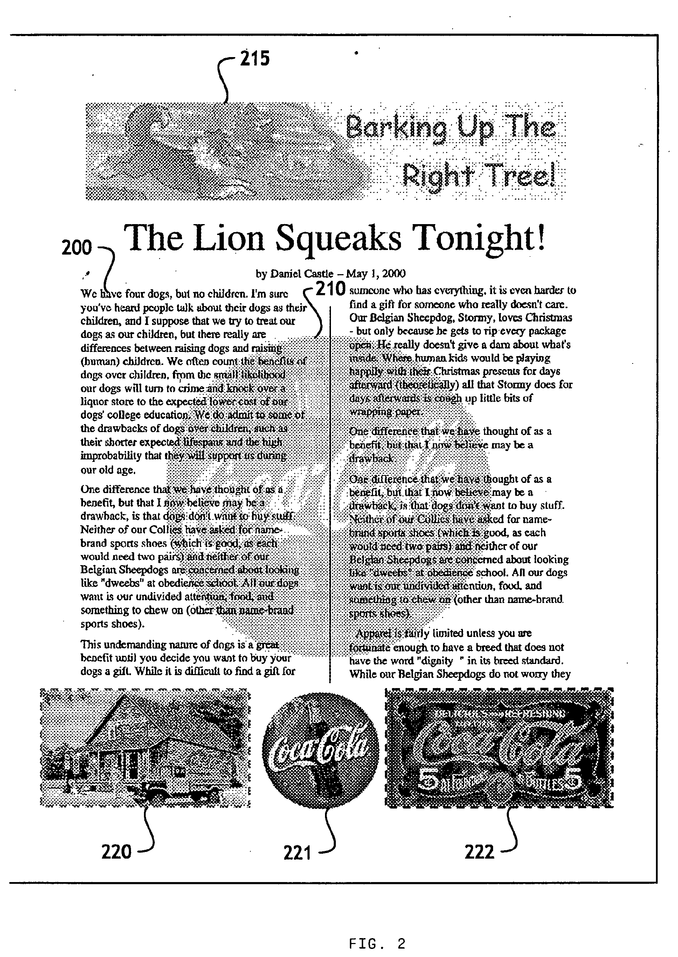

FIG. 2 illustrates a preferred embodiment of the Web page of the present invention. This embodiment comprises a page of information content (200) on a first layer while advertisement content (210) is seen in the background on a second layer. The first layer also comprises additional advertisement content (220 - 222) that is related to the second layer advertisement content (210).

In the embodiment of FIG. 2, the first layer is comprised of a story (200) related to pets. In the preferred embodiment, a word processing program such as MICROSOFT'S WORD 2000 ™ generates this layer. Other types and brands of word processing programs exist that generate the same or substantially similar appearing page. This page is also comprised of graphics (215) that are related to the story. In another embodiment, publishing programs or other types of content generating programs, such as ADOBE ACROBAT ™, are used to generate the Web pages of the present invention.

An alternate embodiment uses other information content and additional story-related graphics. Still another embodiment uses other information content with no graphics. There is no information content restriction for the present invention to operate properly.

The first layer is additionally comprised of advertisement content graphics (220 - 222) at the bottom of the page. In this embodiment, the advertisement (220 - 222) is for a COCA-COLA™ product and is broken up into three separate graphics (220 - 222). Alternate embodiments use other forms of advertisement content such as text, text over graphics, and graphics without text. The present invention does not place any restrictions on the advertisement content usage.

The advertisement content graphics (220 - 222), in the preferred embodiment, are placed on the page by the same content generating program as that which generated the information content (200). The content generating program of the present invention has an object placement function that allows pictures, graphics, and text that are scanned into an electronic form to be placed on a page using a picture placement process. The text (200) is then placed over the objects by the word processor. The word processor, in one embodiment, also has a picture generation function that provides the capability to generate original graphics and place them on the page as advertisement content.

The second layer of advertisement content is placed on the page using the content generating program's object placement function. The scanned-in picture or electronically generated graphic is placed on this layer. The contrast of the advertisement layer is reduced so that the advertisement content has a level of transparency associated with it. This permits the text to stand out from the advertisement layer such that the text is still readable while the advertisement layer is muted.

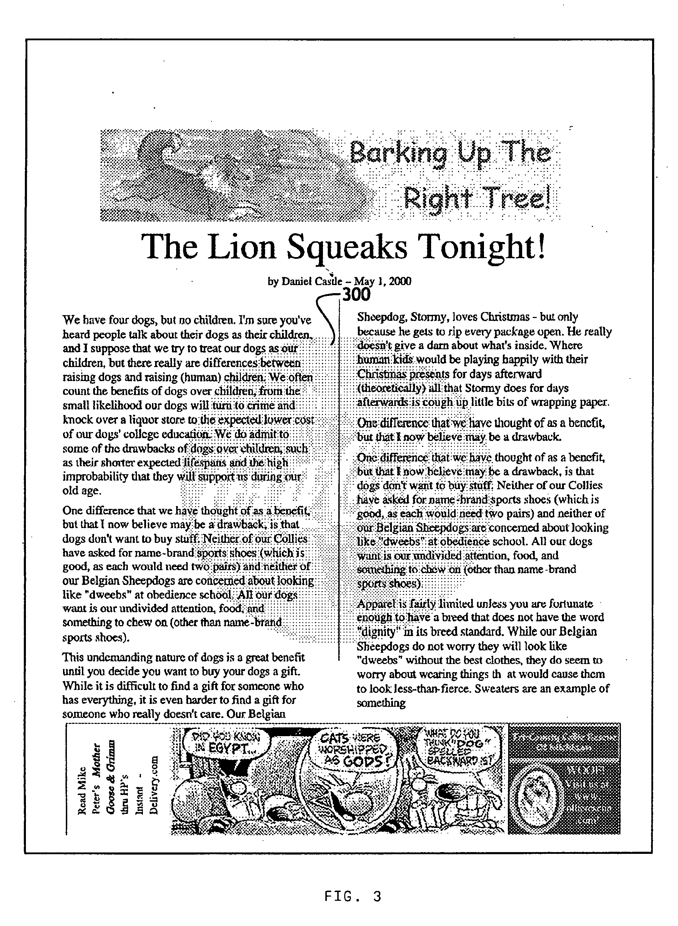

FIG. 3 illustrates another embodiment of the present invention. In this embodiment, the advertisement content is more transparent than in the preferred embodiment. This makes the advertisement content less noticeable to a reader.

FIG. 3 also illustrates that the advertisement content of the second layer does not have to be related to the advertisement content of the first layer. This increases the number of advertisers that have access to that page. However, the smaller advertisements are now less visible without the larger, background advertising (300) to supplement the smaller foreground advertising.

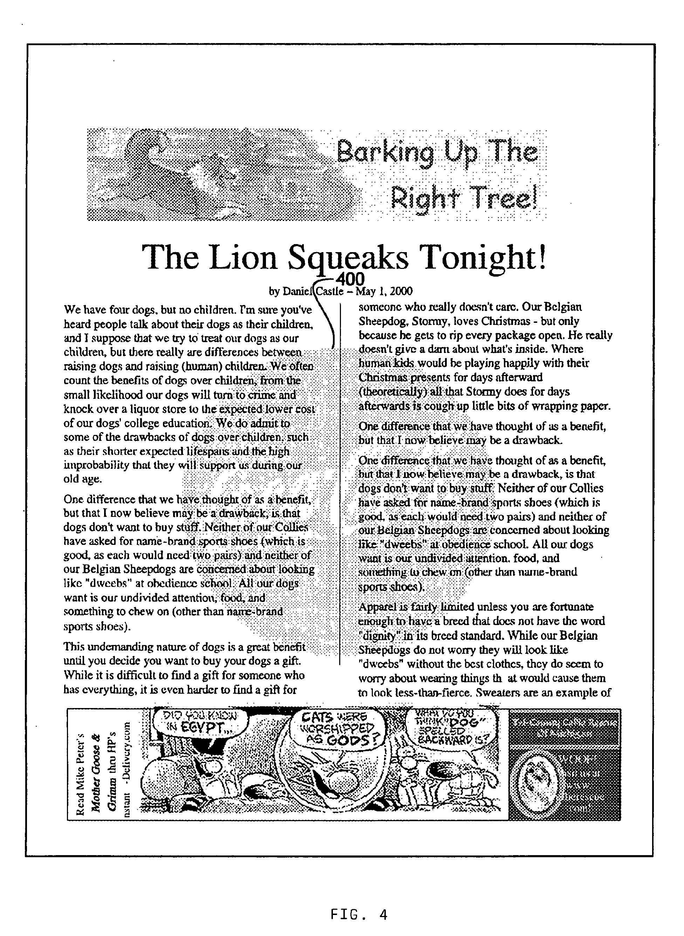

FIG. 4 illustrates yet another level of transparency for the advertisement content (400). This level is more transparent than FIG. 2 but less transparent than FIG. 3. FIGs. 2 - 4 illustrate only three of the different levels of transparency possible. The present invention encompasses any level of transparency that shows both the information content and the advertisement content.

In one embodiment of the present invention, the background advertising is on the first layer and the second layer is comprised of the information content. The first layer of advertising has such low contrast that both the advertisement content of the first layer and the information content of the second layer are clearly visible.

In yet another embodiment, both the advertising content and the information content is placed on the same layer. By adjusting the contrast and brightness of the advertising content, the text and advertising can co-exist and still be readable.

When printed, the information content and the advertisement content of the Web pages of FIGS. 2 - 4 are printed substantially simultaneously. The print driver process that controls the print cartridges has the ability to print both layers as one.

In an alternate embodiment, one of the layers of content is printed separately from the other layer. This would require the printer to make two passes on the page in order to put down both layers. While encompassed by the present invention, this embodiment is less desirable to the consumer than the preferred embodiment of printing both layers substantially simultaneously.

While the present invention is illustrated with one or two layers, it is not limited to two layers. Alternate embodiments may have advertisements on three or more layers.

The advertising content of the present invention, in the preferred embodiment, is determined by the information content. This increases the chances that the advertising is viewed by consumers who are interested in the product or service being advertised. If the advertising content and the information content are related and the consumer is interested in the information content, the consumer will more likely be interested in the advertising content as well.

The Web pages with background advertising of the present invention, in the preferred embodiment, are transmitted from a central Web server where they are stored. This central location allows the editors of the content to combine the information content with the advertising content. The pages are then stored on the server until the delivery is requested by the consumer's client software.

The client software can be a dedicated information retrieval client that stores the consumer's requests and then transmits this request to the server. The server then transmits back the requested information with the background advertising. Using this type of client software, the consumer can set the preferences of the retrieved information. An example of such a client process is HEWLETT-PACKARD'S INSTANT DELIVERY™ process.

In another embodiment, the client software is a Web browser such as NETSCAPE COMMUNICATOR ™ or MICROSOFT INTERNET EXPLORER ™. The consumer enters the Universal Resource Locator (URL) into the browser. The browser then sends the request to the Web server. The Web server responds with the requested page containing the background advertisement content. A cookie might be stored on the consumer's computer that contains the type of equipment on which the client is running and, therefore, what level of transparency the equipment can handle. This cookie would then be accessed by the Web server to determine what to send the client software.

In any client software process, the consumer can set the schedule for the information download, the type of information, and even the transparency level of the advertisement. Additionally, when the client software sends the request to the server, the client software might include the capabilities of the equipment running the client and, therefore, what transparency level is possible to be viewed and/or printed by the consumer's equipment. The transparency level of the background advertisement may also be set by a default, one transparency level.

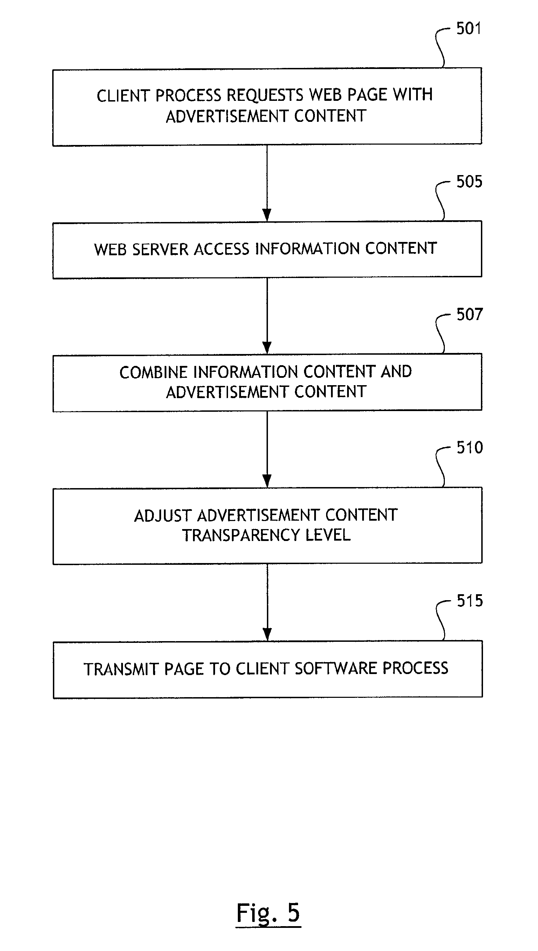

FIG. 5 illustrates a flowchart of the background advertising process of the present invention. The process begins with the client process requesting a Web page (step 501) from the Web server. Included in the Web page request from the client is the transparency level of the background advertising.

The Web server accesses the requested Web page (step 505) from its storage media. In one embodiment, the advertising content is stored separately from the information content and added to the Web page (step 507) before it is transmitted to the client software process. This permits the advertising content to be changed easily based on the consumer's profile and/or a change in the information content.

Another embodiment stores the information content and advertising content as one page of information. This embodiment has the advantage of reduced processing requirements and reduced memory for storage.

The transparency level of the background advertising is adjusted (step 510) according to equipment capabilities, user request, or default conditions. The Web page is then downloaded (step 515) to the client software process for display.

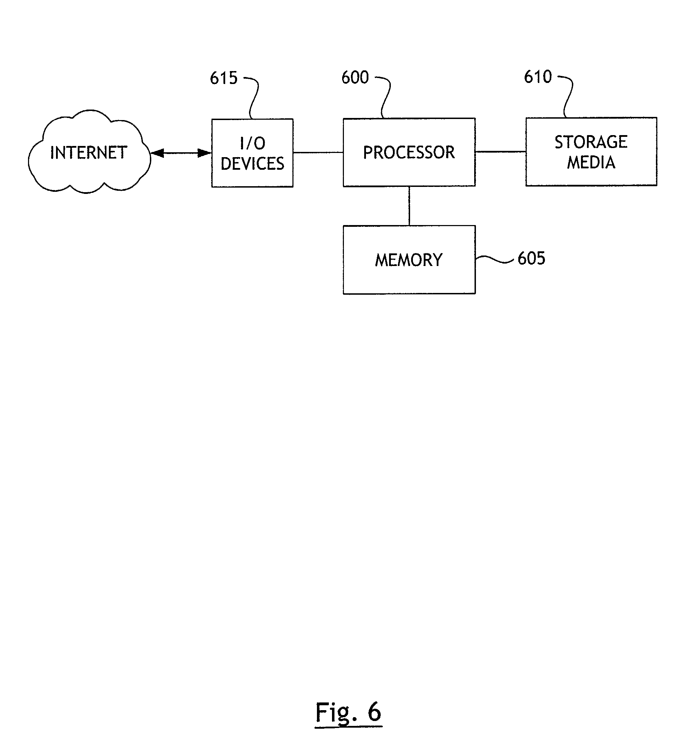

FIG. 6 illustrates a block diagram of a Web server of the present invention. The server is comprised of a processor (600) for controlling the server. The memory (605), coupled to the processor (600), is responsible for temporarily holding data for access by the various computers and mobile devices that are coupled to the Internet or other network. Storage media (610), coupled to the processor (600) can include hard drives, floppy drives, and any other media for storing data in a more permanent fashion.

The Input/Output (I/O) devices (615) are used to couple the server to the Internet or any other network coupled to the server. The I/O devices (615) include modems, Ethernet cards, and any other devices required to couple the server to the network. The I/O devices (615) also include displays, monitors, keyboards, and other devices required by operators who interact with the server.

The client process software in the preferred embodiment of the present invention operates on a typical personal computer such as those manufactured and sold by HEWLETT- PACKARD™, GATEWAY™, and APPLE COMPUTER™. These personal computers are well known in the art and not discussed further. Alternate embodiments use other types of computer devices such as personal digital assistants that are coupled to the Internet through a wired or wireless modem. Another type of computer device encompassed by the present invention is a wireless telephone that has Internet access capabilities.

The preferred embodiment of the present invention displays the advertisements on paper. Alternate embodiments display the advertisements on any other form of printout. Still other embodiments display the advertisements on personal digital assistant displays, monitors, electronic books and any other form of electronic display.

## Claims

1. A World Wide Web server system for displaying an advertisement over the Internet to a client, the system comprising:
memory (605) that stores data for processing;
storage media (610) to store software processes, a plurality of informational content, and a plurality of advertisement content;
input/output devices (615) that provide access to the Internet for the server system; and
a processor (600) that controls the system, the processor coupled to the memory, the storage media, and the input/output devices, the processor having means for reading a first informational content and a first advertisement content from the storage media and transmitting the first informational content in a first layer and the first advertisement content in a second layer.

2. The system of claim 1 wherein the processor comprises means for adjusting a predetermined level of transparency of the second layer such that the first layer and the second layer can be viewed simultaneously.

3. The system of claim 1 or 2 wherein the storage media stores information relating to the client.

4. The system of claim 3 wherein the processor has means for determining an advertisement content from the plurality of advertisement content in response to the information relating to the client.

5. The system of one of the preceding claims wherein the client is an automatic content delivery service that requests information content from predetermined Internet resources.

6. A method for transmitting advertising content over the Internet from a server to a client operating on a computer device, the method comprising the steps of:
receiving (501) a request for predetermined information content;
accessing (505) the predetermined information content from memory;
accessing (505) the advertising content having a predetermined transparency level;
adjusting (510) the predetermined transparency level of the advertising content;
combining (507) the advertising content with the predetermined information content to form a Web page; and
transmitting (515) the Web page to the client.

7. The method of claim 6 wherein the request for predetermined information content is transmitted by the client.

8. The method of claim 6 or 7 wherein the transparency level is adjusted in response to capabilities of the computer device.

9. The method of one of claims 6 to 8 wherein the step of combining further comprises the steps of combining informational content on a first layer and combining advertisement content behind the informational content, on a second layer, such that both the informational content and the advertisement content are viewable simultaneously.

10. The method of claim 9 and further comprising the step of printing both the first and the second layers on a page such that both layers are viewable simultaneously.
